(19) Europäisches Patentamt
European Patent Office
Office européen des brevets

(11) **EP 2 808 608 A1**

(12) **EUROPEAN PATENT APPLICATION**
published in accordance with Art. 153(4) EPC

(43) Date of publication:
**03.12.2014 Bulletin 2014/49**

(51) Int Cl.:
*F23N 5/00* (2006.01)　　*F23N 1/00* (2006.01)
*G01F 1/00* (2006.01)　　*G01F 15/04* (2006.01)
*H01M 8/04* (2006.01)　　*H01M 8/06* (2006.01)

(21) Application number: **13740707.8**

(86) International application number:
**PCT/JP2013/051303**

(22) Date of filing: **23.01.2013**

(87) International publication number:
**WO 2013/111777 (01.08.2013 Gazette 2013/31)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **23.01.2012　JP 2012011220**

(71) Applicant: **JX Nippon Oil & Energy Corporation
Chiyoda-ku
Tokyo 100-8162 (JP)**

(72) Inventors:
• **TSUKAGOSHI, Shouichi
Tokyo 100-8162 (JP)**
• **MIZUNO, Yasushi
Tokyo 100-8162 (JP)**

(74) Representative: **Patentanwälte Vollmann &
Hemmer
Wallstraße 33a
23560 Lübeck (DE)**

(54) **FUEL SUPPLY SYSTEM, FUEL CELL SYSTEM, AND METHOD FOR RUNNING EACH**

(57)　To stably supply a gaseous fuel by setting a calorific value as a management value even if a composition of the fuel varies. A composition-independent flow meter 4 is disposed in series with a thermal flow meter 3 in a supply pathway of the fuel. When the measured values of the both flow meters 3,4 differ by a certain degree, it is determined that there is an abnormal state, and the conversion factor with respect to the thermal flow meter 3 is set. The composition of the fuel is estimated based on the conversion factor, and the calorific value of the fuel is estimated based on the composition. The supply amount of the fuel by a supply device 2 is adjusted based on the calorific value of the fuel so that the target supply calorific value per unit time is obtained.

*FIG. 1*

EP 2 808 608 A1

**Description**

TECHNICAL FIELD

The present invention relates to a fuel supply system or a fuel cell system that includes a fuel supply device configured to supply a hydrocarbon-based gaseous fuel, and more particularly, to a technique for controlling a supply amount of the gaseous fuel by setting a calorific value as a management value (control value).

BACKGROUND ART

In the fuel supply system, a flow meter configured to measure a flow rate of a gaseous fuel is disposed in a supply pathway of the gaseous fuel, and the measured flow rate is used in feedback control of the supply amount of fuel or used as a parameter of another control. As the flow meter, in general, a thermal flow meter as a mass flow meter is used. The reason is that the thermal flow meter is easily reduced in size and has characteristics of satisfactory responsiveness due to the size reduction.

However, due to variation in properties (composition and calorific value) of the gaseous fuel, satisfactory control may not be performed. In particular, in many cases, when using city gas derived from natural gas, the composition or the calorific value thereof may vary depending on gas companies or depending on regions even when the gas is supplied by the same gas company, and in addition, the compositions may vary due to mixing of the air on the way or the like, depending on a pathway or a distance from a supply source. When the properties of the fuel, especially, the compositions vary in this way, the thermal flow meter may not indicate the correct value, and accordingly it may be difficult to perform a preferred control.

In addition, the technique disclosed in Patent Document 1 has an object to control a supply amount of a gaseous fuel by setting a calorific value as a management value, regardless of the differences and variations in composition of the gaseous fuel, and to maintain, for example, a constant supply calorific value (calorific value flow rate) per unit time, to stably supply the gaseous fuel. For this reason, the technique described in Patent Document 1 obtains the calorific value flow rate of the gaseous fuel from the output of the thermal flow meter provided in a supply pathway of the gaseous fuel, and compares a control target value of the thermal quantity flow rate with the obtained value, to control operation of a flow rate control valve. In regard to a CH-based fuel gas, regardless of its composition, this technique uses a one-to-one relationship between the output of the thermal flow meter and the calorific value flow rate, defined as the product of the calorific value per unit volume of the gaseous fuel and a flow velocity (volumetric flow rate) thereof.

REFERENCE DOCUMENT LIST

PATENT DOCUMENT

Patent Document 1: Japanese Patent Application Laid-open Publication No. 2009-162436

SUMMARY OF THE INVENTION

PROBLEMS TO BE SOLVED BY THE INVENTION

However, the technique described in Patent Document 1 is based on the premise that the calorific value flow rate can be determined from the output of the thermal flow meter, and even if it is possible to apply the technique to a case where the gaseous fuel consists of only the CH-based gas, it is not possible to apply the technique to a case where nitrogen gas is mixed.

In view of such circumstances, an object of the present invention is to provide a fuel supply system that can estimate the fuel properties and more accurately control the supply amount of the gaseous fuel by setting the calorific value as the management value.

Furthermore, another object of the present invention is to provide not only a general-purpose fuel supply system, but a fuel cell system that uses the gaseous fuel after reforming.

MEANS FOR SOLVING THE PROBLEMS

A fuel supply system according to the present invention includes a fuel supply device configured to supply a hydrocarbon-based gaseous fuel to a supply target, a flow meter configured to measure a flow rate of the gaseous fuel supplied by the fuel supply device, and a control device to which a signal of the flow meter is input to control a supply amount of the fuel supply device.

Here, as the flow meter, a thermal flow meter, and a composition- independent flow meter capable of measuring the flow rate without depending on a composition of the gaseous fuel are included.

The control device includes a measured flow rate abnormality determination unit configured to determine whether there is an abnormal state based on a degree of difference between a measured value of the thermal flow meter and a measured value of the composition-independent flow meter, a conversion factor setting unit configured to set a conversion factor with respect to the measured value of the thermal flow meter when it is determined that there is the abnormal state, a fuel property estimating unit configured to estimate the fuel properties of the gaseous fuel based on the conversion factor, a calorific value estimating unit configured to estimate a calorific value of the gaseous fuel based on the fuel properties of the gaseous fuel, and a fuel supply amount adjusting unit configured to adjust a supply amount of the gaseous fuel supplied by the fuel supply device based on the calorific value of the gaseous fuel so that a target supply calorific value per unit time is obtained.

The conversion factor setting unit may set the conversion factor based on a ratio of the measured value of the composition-independent flow meter and the measured value of the thermal flow meter.

The fuel property estimating unit may specify a sub-ingredient from predetermined sub-ingredient candidates, depending on the result of comparison between a conversion factor set by the conversion factor setting unit and a conversion factor previously determined for a main ingredient of the gaseous fuel, and the fuel property estimating unit may obtain molar fractions of the main ingredient and the specified sub-ingredient, based on the conversion factor set by the conversion factor setting unit, the conversion factor previously determined for the main ingredient, and a conversion factor previously determined for the specified sub-ingredient. Furthermore, the sub-ingredient candidates may be a combustible ingredient having the calorific value different from that of the main ingredient of the gaseous fuel, and an incombustible ingredient.

The calorific value estimating unit may calculate the calorific value of the gaseous fuel, from the respective calorific values and the respective molar fractions of the main ingredient and the specified sub-ingredient.

The fuel supply amount adjusting unit may calculate a target supply amount of fuel, by dividing the target supply calorific value per unit time by the calorific value of the gaseous fuel.

The supply target of the fuel supply system is not particularly limited and the fuel supply system can be used as a general-purpose fuel supply system, and the present invention is also applicable to a fuel cell system as follows.

That is, the present invention is also applicable to a fuel cell system configured to include a fuel reforming device configured to generate a hydrogen-rich reformed fuel by performing steam reforming of a hydrocarbon-based gaseous fuel, a fuel cell stack configured to perform the power generation by an electrochemical reaction between the generated reformed fuel and air, a fuel supply device configured to supply the gaseous fuel to the reforming device, a flow meter configured to measure the flow rate of the gaseous fuel supplied to the reforming device from the fuel supply device, and a control device to which a signal of the flow meter is input to control a supply amount of the fuel supply device.

EFFECTS OF THE INVENTION

According to the present invention, it is possible to obtain an effect capable of estimating the fuel properties and accurately controlling the supply amount of the gaseous fuel by setting the calorific value as the management value, even when the properties of the gaseous fuel vary.

BRIEF DESCRIPTION OF THE DRAWINGS

Fig. 1    is a schematic configuration diagram of a fuel supply system according to a first embodiment of the present invention.
Fig. 2    is a functional block diagram of the control device in the first embodiment.
Fig. 3    is a flowchart of the measured flow rate abnormality determination in the first embodiment.
Fig. 4    is a flowchart of the control at the time of measured flow rate abnormality in the first embodiment.
Fig. 5    is a schematic configuration block diagram of a fuel cell system according to a second embodiment of the present invention.
Fig. 6    is a functional block diagram of the control device in the second embodiment.
Fig. 7    is a flowchart of the control at the time of measured flow rate abnormality in the second embodiment.

MODE FOR CARRING OUT THE INVENTION

Hereinafter, embodiments of the present invention will be described in detail.

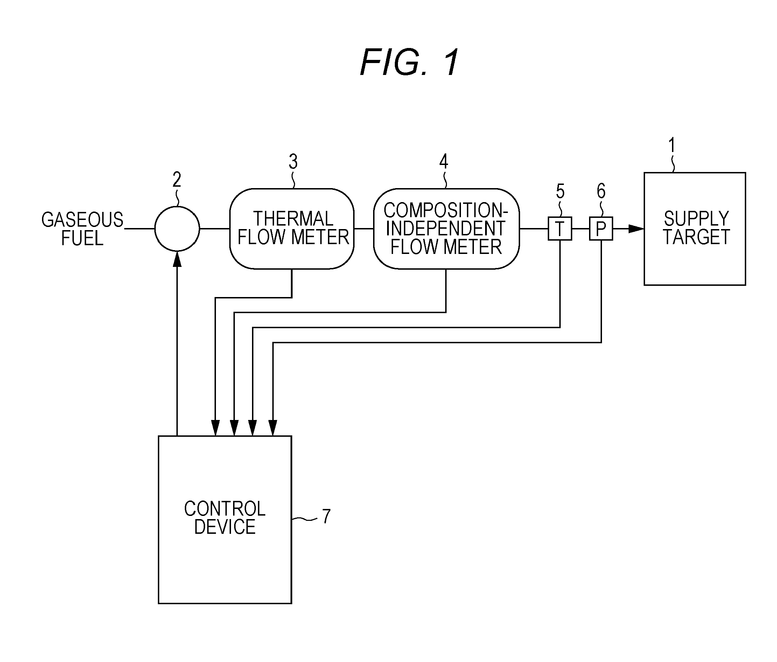

First, an embodiment in which the present invention as a first embodiment of the present invention is applied to a general-purpose fuel supply system will be described with reference to Figs. 1 to 4.

Fig. 1 is a schematic configuration diagram of a fuel supply system according to the first embodiment of the present invention.

The fuel supply system of the present embodiment is configured to include a fuel supply device 2 that supplies a hydrocarbon-based gaseous fuel to a supply target (various types of gas equipment) 1. In the present embodiment, especially, it is assumed to supply city gas derived from natural gas as the gaseous fuel.

The fuel supply device 2 is constituted by a flow rate control valve or the like connected to the gaseous fuel supply source, and the supply amount thereof is controlled based on a signal from a control device 7.

In a supply pathway of the gaseous fuel supplied from the fuel supply device 2 to the supply target 1, a thermal flow meter (thermal mass flow meter) 3, a composition-independent flow meter 4, a fuel temperature sensor 5, and a fuel pressure sensor 6 are provided.

The thermal flow meter 3 is intended to measure the flow rate using a thermal diffusion effect of the gas, and since the amount of heat transmitted by the gas varies based on the compression degree of the gas, it is possible to measure a mass flow rate. Since the thermal flow meter 3 has characteristics in which the size reduction is easy and responsiveness is satisfactory due to the size reduction, the thermal flow meter 3 is used as a primary flow meter. However, since the output varies depending on a composition of gas to be measured, it is common to use the thermal flow meter 3 with adjustment for the specified composition of the gas to be measured.

The composition-independent flow meter 4 is a flow meter capable of measuring the flow rate without depending on the composition of the gas to be measured, and for example, it is possible to use a volumetric flow meter, an ultrasonic flow meter, a Coriolis flow meter, a vortex flow meter or the like. The composition-independent flow meter 4 is used as an auxiliary flow meter. The composition-independent flow meter 4 may be any one of the volumetric flow meter or the mass flow meter, but in the present embodiment, it will be described as being a volumetric flow meter.

The fuel temperature sensor 5 measures a fuel temperature $Tf$. The fuel pressure sensor 6 measures a fuel pressure $Pf$.

Measurement signals of the thermal flow meter 3, the composition-independent flow meter 4, the fuel temperature sensor 5, and the fuel pressure sensor 6 are sent to the control device 7.

The control device 7 is configured to include a microcomputer, performs arithmetic processing in accordance with a control program, and controls the operation of the fuel supply device 2, while reading signals from various sensors, including the thermal flow meter 3, the composition-independent flow meter 4, the fuel temperature sensor 5, and the fuel pressure sensor 6. The control device 7 may control various other devices, simultaneously with the control of the fuel supply device 2.

Next, the control of the supply amount of fuel of the control device 7 will be described.

In normal control, the target supply amount of fuel is mainly set according to target supply conditions, and the supply amount of the gaseous fuel is controlled via the fuel supply device 2. Here, feedback control is performed, referring to the measured flow rate of the thermal flow meter 3. In addition, the measured flow rate of the thermal flow meter 3 is used as another control parameter as necessary.

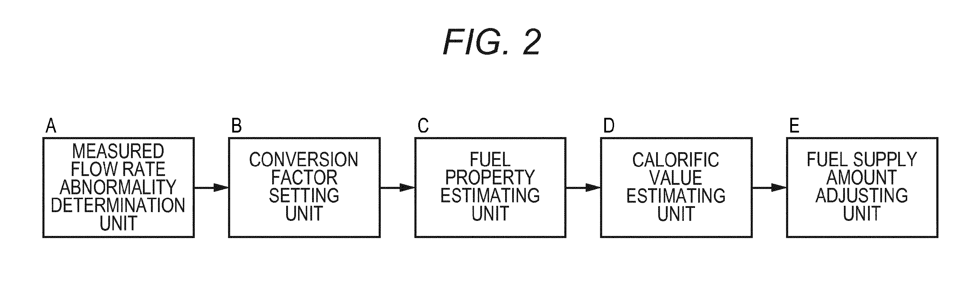

Meanwhile, in order to cope with an measured flow rate abnormality of the thermal flow meter 3, as illustrated in the functional block diagram of Fig. 2, the control device 7 is equipped with a measured flow rate abnormality determination unit A configured to determine whether there is an abnormal state based on the degree of difference between the measured value of the thermal flow meter 3 and the measured value of the composition-independent flow meter 4, a conversion factor setting unit B configured to set a conversion factor with respect to the measured value of the thermal flow meter 3 when it is determined that there is the abnormal state, a fuel property estimating unit C configured to estimate the fuel properties of the gaseous fuel on the basis of the conversion factor, a calorific value estimating unit D configured to estimate the calorific value of the gaseous fuel (a calorific value generated when fuel of a constant unit is completely combusted) on the basis of the fuel properties of the gaseous fuel, and a fuel supply amount adjusting unit E configured to adjust a supply amount (flow rate) of the gaseous fuel by the fuel supply device 2 so that a target supply calorific value per unit time (calorific value flow rate) is obtained on the basis of the calorific value of the gaseous fuel.

The measured flow rate abnormality determination unit A determines that there is an abnormal state (the measured value of the thermal flow meter 3 is different from the actual flow rate), when the measured value of the thermal flow meter 3 and the measured value of the composition-independent flow meter 4 differ from each other by a certain degree or higher.

The conversion factor setting unit B sets the conversion factor based on the ratio of the measured value of the composition-independent flow meter 4 and the measured value of the thermal flow meter 3.

Specifically, the fuel property estimating unit C specifies the sub-ingredient from the previously determined sub-ingredient candidates (for example, $C_3H_8$ and $N_2$) depending on the result of comparison between the conversion factor set by the conversion factor setting unit B and the conversion factor previously determined for the main ingredient (for example, $CH_4$) of the gaseous fuel, and obtains the molar fractions of the main ingredient and the specified sub-ingredient, based on the conversion factor set by the conversion factor setting unit B, the conversion factor previously determined for the main ingredient, and a conversion factor previously determined for the specified sub-ingredient.

Specifically, the calorific value estimating unit D calculates the calorific value of the gaseous fuel from the respective calorific values and the respective molar fractions of the main ingredient and the specified sub-ingredient.

Specifically, the fuel supply amount adjusting unit E calculates a target supply amount of fuel, by dividing the target supply calorific value per unit time by the calorific value of the gaseous fuel estimated by the calorific value estimating unit D.

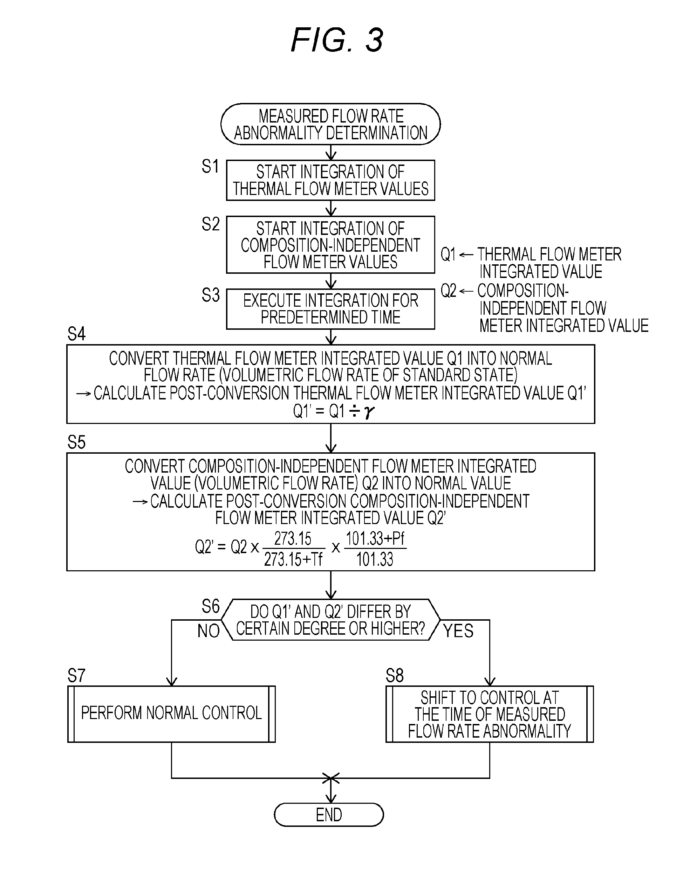

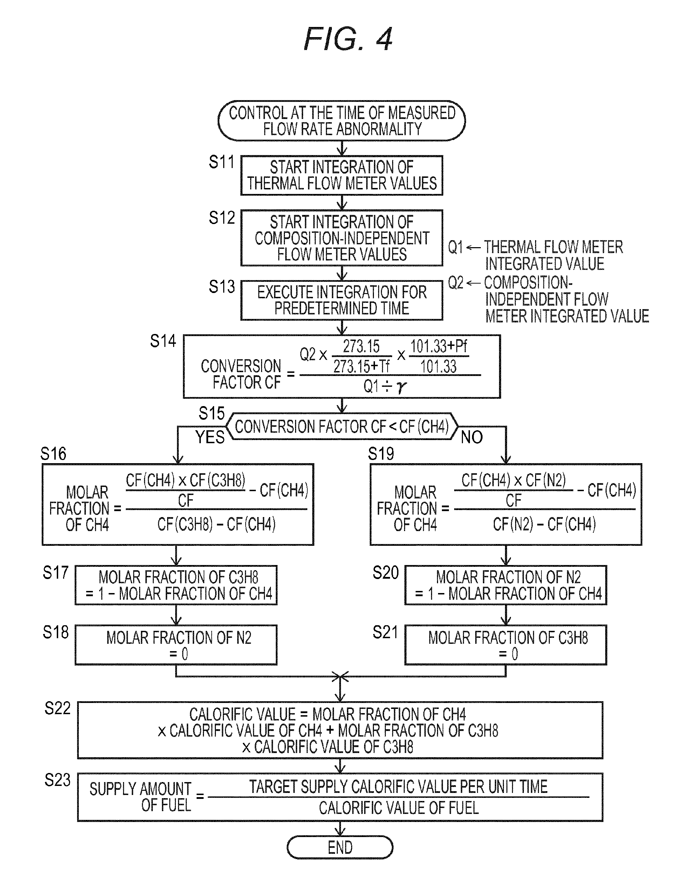

Herein, the function of the measured flow rate abnormality determination unit A is achieved by the flowchart in Fig. 3, and the functions of the conversion factor setting unit B, the fuel property estimating unit C, the calorific value estimating unit D, and the fuel supply amount adjusting unit E are achieved by the flowchart of Fig. 4.

Fig. 3 is a flowchart of the measured flow rate abnormality determination.

In S1, the integration of the measured values (thermal flow meter values) of the thermal flow meter 3 starts.

In S2, the integration of the measured values (composition-independent flow meter values) of the composition-independent flow meter 4 starts.

In S3, these integrations are executed for a predetermined time period to obtain a thermal flow meter integrated value (mass flow rate) Q1 and a composition-independent flow meter integrated value (volumetric flow rate) Q2, as the final integrated values.

In S4, the thermal flow meter integrated value (mass flow rate) Q1 is converted into a normal flow rate (volumetric flow rate of the standard state). More specifically, a post-conversion thermal flow meter integrated value Q1' is calculated by the following formula.

$$Q1' = Q1 \div \gamma$$

That is, the thermal flow meter integrated value Q1 is divided by specific gravity y (the specific gravity at the standard state in the design gas composition), to be converted into a volumetric flow rate (Q1') at the standard state.

In S5, the composition-independent flow meter integrated value (volumetric flow rate) Q2 is converted into a normal value. More specifically, a post-conversion composition-independent flow meter integrated value Q2' is calculated by the following formula.

$$Q2' = Q2 \times (273.15 \div (273.15 + Tf)) \times ((101.33 + Pf) \div 101.33)$$

That is, the composition-independent flow meter integrated value (volumetric flow rate) Q2 is converted into the flow rate (Q2') at the standard (normal) state using the fuel temperature Tf and the fuel pressure Pf. The fuel temperature Tf and the fuel pressure Pf are the respective measured values of the fuel temperature sensor 5 and the fuel pressure sensor 6.

In S6, it is determined whether the post-conversion thermal flow meter integrated value Q1' and the post-conversion composition-independent flow meter integrated value Q2' differ from each other by a certain degree or higher.

More specifically, it is determined whether there is a relationship of " |Q1' - Q2' |/Q2' > predetermined value" or "|Q2' - Q1'|/Q1' > predetermined value". It may be determined simply whether "|Q1'-Q2'| > predetermined value."

Furthermore, the conversion factor CF may be calculated as in S14 in the flowchart of Fig. 4 to be described later to determine whether "the conversion factor CF is a predetermined upper limit value or more or a predetermined lower limit value or less."

As a result of this determination, in the case of NO (when there is no difference), the flow proceeds to S7 to execute the normal control. In contrast, in the case of YES (when there is a difference), it is determined that the measured value of the thermal flow meter 3 is different from the actual flow rate, the flow proceeds to S8 and shifts to the control at the time of measured flow rate abnormality (flow of Fig. 4).

Fig. 4 is a flowchart of the control at the time of measured flow rate abnormality (control of supply amount of fuel at the time of abnormality determination).

In S11, the integration of the measured values (thermal flow meter values) of the thermal flow meter 3 starts.

In S12, the integration of the measured values (composition-independent flow meter values) of the composition-independent flow meter 4 starts.

In S13, these integrations are executed for a predetermined time period to obtain the thermal flow meter integrated value (mass flow rate) Q1 and the composition-independent flow meter integrated value (volumetric flow rate) Q2, as the final integrated values.

In S14, the conversion factor CF is calculated by the following formula.

$$\text{Conversion factor } CF = [Q2 \times (273.15 \div (273.15 + Tf)) \times ((101.33 + Pf) \div 101.33)]/[Q1 \div \gamma]$$

In other words, in the same manner as S4 and S5 of the flowchart of Fig. 3, the post-conversion thermal flow meter integrated value Q1' and the post-conversion composition-independent flow meter integrated value Q2' are calculated, and a ratio thereof is calculated, to obtain a conversion factor CF = Q2'/Q1'.

That is, the thermal flow meter integrated value (mass flow rate) Q1 is converted into the normal flow rate (volumetric flow rate of the standard state). More specifically, the post-conversion thermal flow meter integrated value Q1' is calculated by the following formula.

$$Q1' = Q1 \div \gamma$$

That is, the thermal flow meter integrated value Q1 is divided by the specific gravity $\gamma$ (the specific gravity at the standard state in the design gas composition) and is converted into the volumetric flow rate (Q1') at the standard state.

In addition, the composition-independent flow meter integrated value (volumetric flow rate) Q2 is converted into the normal value. More specifically, the post-conversion composition-independent flow meter integrated value Q2' is calculated by the following formula.

$$Q2' = Q2 \times (273.15 \div (273.15 + Tf)) \times ((101.33 + Pf) \div 101.33)$$

That is, the composition-independent flow meter integrated value (volumetric flow rate) Q2 is converted into the flow rate (Q2') at the standard (normal) state using the fuel temperature Tf and the fuel pressure Pf. The fuel temperature Tf and the fuel pressure Pf are the respective measured values of the fuel temperature sensor 5 and the fuel pressure sensor 6.

Moreover, after conversion thereof, the ratio of the post-conversion thermal flow meter integrated value Q1' and the post-conversion composition-independent flow meter integrated value Q2' (see the following formula) is calculated, to obtain the conversion factor CF.

$$\text{Conversion factor } CF = Q2'/Q1'$$

In S15, it is determined whether the conversion factor CF is less than the conversion factor CF(CH4) = 0.74 of methane CH4. The purpose of this is to approximate the composition by the determined results.

When the conversion factor CF is less than the conversion factor CF(CH4) of methane CH4 (i.e., CF < CF(CH4)), the flow proceeds to S16 to S18. In this case, it is estimated that the gas consists of two ingredients, methane CH4 and propane C3H8, and the molar fractions of these ingredients are calculated.

In S16, the molar fraction of methane CH4 is calculated from the conversion factor CF obtained in S14, the conversion factor CF(CH4) = 0.74 of methane CH4, and the conversion factor CF(C3H8) = 0.34 of propane C3H8, by the following formula.

$$\text{Molar fraction of CH4} = [CF(CH4) \times CF(C3H8)/CF - CF(CH4)]/[CF(C3H8) - CF(CH4)]$$

**[0066]** This formula is obtained in the following manner.

$$\text{Conversion factor} = 1/\Sigma(\text{volumetric fraction of ingredient i/conversion factor of ingredient i})$$

**[0067]** When using two ingredients, CH4 and C3H8, setting the volumetric fraction = molar fraction while ignoring a compression factor, and setting the molar fraction of CH4 to X, the molar fraction of C3H8 becomes 1 - X. Thus, the following is obtained.

$$CF = 1/[X/CF(CH4) + (1 - X)/CF(C3H8)]$$

**[0068]** Furthermore, by solving this in regard to X, the above formula can be obtained.
**[0069]** In S17, the molar fraction of propane C3H8 is calculated from the molar fraction of methane CH4 obtained in S16, by the following formula.

$$\text{Molar fraction of C3H8} = 1 - \text{molar fraction of CH4}$$

**[0070]** In S18, under the above-described estimation, the molar fraction of nitrogen N2 is set to 0 as in the following formula.

$$\text{Molar fraction of N2} = 0$$

**[0071]** When the conversion factor CF is greater than the conversion factor CF(CH4) of methane CH4 (i.e., CF > CF(CH4)), the flow proceeds to S19 to S21. In this case, it is estimated that the gas consists of two ingredients, methane CH4 and nitrogen N2, and the molar fractions of these ingredients are calculated.
**[0072]** In S19, the molar fraction of methane CH4 is calculated from the conversion factor CF obtained in S14, the conversion factor CF(CH4) = 0.74 of methane CH4, and the conversion factor CF(N2) = 1.00 of nitrogen N2, by the following formula.

$$\text{Molar fraction of CH4} = [CF(CH4) \times CF(N2)/CF - CF(CH4)]/[CF(N2) - CF(CH4)]$$

**[0073]** This formula is also obtained in the same manner as described above.
**[0074]** In S20, the molar fraction of nitrogen N2 is calculated from the molar fraction of methane CH4 obtained in S19, by the following formula.

$$\text{Molar fraction of N2} = 1 - \text{molar fraction of CH4}$$

In S21, under the above-described estimation, the molar fraction of propane C3H8 is set to 0 as in the following formula.

$$\text{Molar fraction of C3H8} = 0$$

After calculation of the molar fractions in S16 to S18 or S19 to S21, the flow proceeds to S22.

In S22, the calorific value (calorific value that occurs when fuel of a certain unit is completely combusted) of the gaseous fuel is calculated. Specifically, the calorific value of the gaseous fuel is calculated from previously prepared known calorific values of CH4 and C3H8, and the respective molar fractions of CH4 and C3H8 obtained in S16 to S21, by the following formula.

$$\text{Calorific value of the gaseous fuel} = \text{molar fraction of CH4} \times \text{calorific value of CH4} + \text{molar fraction of C3H8} \times \text{calorific value of C3H8}$$

In S23, the supply amount of fuel is calculated based on the calorific value of the gaseous fuel obtained in S22 so as to obtain the target supply calorific value per unit time. Specifically, the supply amount of fuel is calculated by dividing the target supply calorific value per unit time by the calorific value of the gaseous fuel.

$$\text{Supply amount of fuel} = (\text{target supply calorific value per unit time})/(\text{calolific value of the gaseous fuel})$$

The supply amount of fuel calculated in this way is set as a target value for control, and the control of the supply amount of fuel is performed via the fuel supply device 2.

Here, simultaneously with the control of the supply amount of fuel, when performing the control of the supply amount of air in order to completely combust the fuel, the control is performed as follows.

The supply amount of air (target value) is calculated from the supply amount of fuel determined in S23 and the composition of the gaseous fuel (the molar fraction of methane CH4 and the molar fraction of propane C3H8) by the following formula.

Supply amount of air = supply amount of fuel × (molar fraction of CH4 × 2 + molar fraction of C3H8 × 5)/(oxygen concentration in the air) × A/F

In the formula, "2" is the number of oxygen molecular required for complete combustion ($CH_4 + 2O_2 \rightarrow CO_2 + 2H_2O$) of methane CH4, "5" is the number of oxygen molecular required for complete combustion ($C_3H_8 + 5O_2 \rightarrow 3CO_2 + 4H_2O$) of propane C3H8, and A/F is a target air-fuel ratio.

The supply amount of air calculated in this manner is set as the target value for control, and the control of the supply amount of air is performed using a combustion air supply device (not illustrated).

When the combustion air supply device is included as described above, it is preferable to include a combustion air supply amount adjusting unit that adjusts the amount of air supplied by the combustion air supply device, based on the supply amount of fuel adjusted by the fuel supply amount adjusting unit E and the fuel properties of the gaseous fuel estimated by the fuel property estimating unit C.

According to the present embodiment, since the measured flow rate abnormality determination unit A configured to determine whether there is an abnormal state based on the degree of difference between the measured value of the thermal flow meter 3 and the measured value of the composition-independent flow meter 4, the conversion factor setting unit B configured to set the conversion factor CF with respect to the measured value of the thermal flow meter 3 when it is determined that there is the abnormal state, the fuel property estimating unit C configured to estimate the fuel properties of the gaseous fuel on the basis of the conversion factor CF, the calorific value estimating unit D configured to estimate the calorific value of the gaseous fuel based on the estimated fuel property, and the fuel supply amount adjusting unit E configured to adjust an amount of the gaseous fuel supplied by the fuel supply device 2 so that a target supply calorific value is obtained on the basis of the estimated calorific value are provided, it is possible to perform the appropriate control based on the estimation of the fuel properties of the gaseous fuel, and it is possible to control the supply calorific value per unit time to be constant even if the composition of the gaseous fuel varies.

Furthermore, the composition-independent flow meter 4 disposed in series with the thermal flow meter 3 in the supply pathway of the gaseous fuel and that is capable of measuring the flow rate without depending on the composition of the gaseous fuel is provided, and the measured flow rate abnormality determination unit A determines that there is an abnormal state when the measured value of the thermal flow meter 3 and the measured value of the composition-independent flow meter 4 differ from each other by a certain degree or higher. Thus, the abnormality determination can be performed appropriately.

Furthermore, according to the present embodiment, the conversion factor setting unit B sets the conversion factor CF based on the ratio of the measured value of the composition-independent flow meter 4 and the measured value of the thermal flow meter 3. Thus, the flow rate correction using the conversion factor CF can be performed.

Furthermore, according to the present embodiment, the fuel property estimating unit C specifies the sub-ingredient from the predetermined sub-ingredient candidates ($C_3H_8$, $N_2$) depending on the result of comparison between the conversion factor CF set by the conversion factor setting unit B and the conversion factor $CF(CH_4)$ previously determined for the main ingredient ($CH_4$) of the gaseous fuel, and obtains the molar fractions of the main ingredient and the specified sub-ingredient, based on the conversion factor CF set by the conversion factor setting unit B, and the conversion factors $CF(CH_4)$ and $CF(C_3H_8)$ or $CF(N_2)$ previously determined for the main ingredient and the specified sub-ingredient. Thus, the practically sufficient estimation accuracy can be achieved.

It is desirable that the sub-ingredient candidates are the combustible ingredient (propane $C_3H_8$ or butane $C_4H_{10}$) and the incombustible ingredient (nitrogen $N_2$) having the calorific value different from that of the main ingredient (methane $CH_4$) of the gaseous fuel.

Furthermore, according to the present embodiment, the calorific value estimating unit D calculates the calorific value of the gaseous fuel from the respective calorific values and the respective molar fractions of the main ingredient and the specified sub-ingredient. Thus, the calorific value of the gaseous fuel can be accurately grasped.

Furthermore, according to the present embodiment, the fuel supply amount adjusting unit E divides the target supply amount of heat generation per unit time by the amount of heat generation of the gaseous fuel obtained by estimation, to calculate the target supply amount of fuel. Thus, the supply amount of heat generation per unit time can be controlled to be constant.

Furthermore, in the above-described embodiment, the supply target (gas equipment) of the fuel supply system was not described, but the supply target is not particularly limited and the fuel supply system can be used as a general-purpose fuel supply system. Referring to the applications, it is possible to include the combustion application requiring the control of the air-fuel ratio, and the chemical reaction application requiring the grasp of the raw material composition. Examples of individual combustion applications may include a boiler or a gas engine. The gas engine is used for a household cogeneration system (a system, in which a gas engine fueled by city gas or LPG performs power generation, and heat generated thereby is used to supply hot water; common name "ECOWILL (R)"), a GHP system (an air conditioning system that drives a compressor by a gas engine and performs cooling and heating by heat-pump operation), an industrial private power generation system, or the like. Examples of individual chemical reaction applications may include a synthetic gas manufacturing device. The synthetic gas manufacturing device uses natural gas, LPG or the like as a raw material, and produces the synthetic gas mainly containing $H_2$ and CO, using various reforming methods. The produced synthetic gas is used as a raw material gas for ammonia synthesis, methanol synthesis or the like. Recently, a demand for synthetic gas in association with new energy production such as GTL, DME, or SNG has been focused.

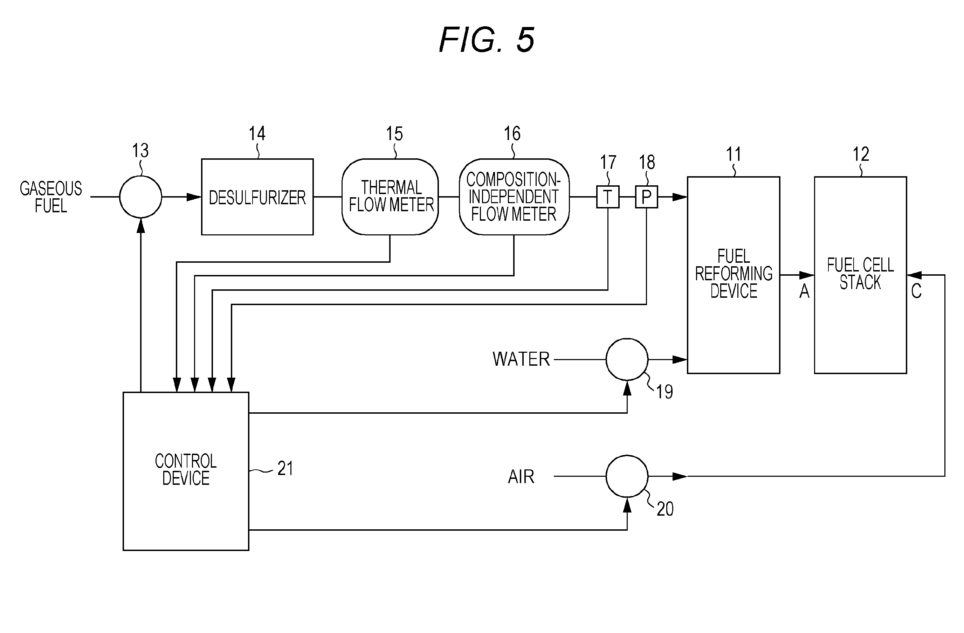

Next, an embodiment in which the present invention as a second embodiment of the present invention is applied to a fuel cell system will be described with reference to Figs. 5 to 7.

Fig. 5    is a schematic configuration diagram of a fuel cell system according to the second embodiment of the present invention.

The fuel cell system of the present embodiment is configured to include a fuel reforming device 11 configured to generate a reformed hydrogen-rich fuel by performing the steam reforming of the hydrocarbon-based gaseous fuel, and a fuel cell stack (an assembly of fuel cells) 12 configured to generate electricity by electrochemical reaction between the reformed fuel (hydrogen) from the fuel reforming device 11 and air (oxygen).

As the gaseous fuel supplied to the fuel reforming device 11, in this embodiment, city gas derived from natural gas is used and is supplied by a fuel supply device 13.

The fuel supply device 13 is constituted by a flow rate control valve or the like connected to the gaseous fuel supply source, and a supply amount of the gaseous fuel is controlled based on a signal from the control device 21.

In the supply pathway of the gaseous fuel supplied from the fuel supply device 13 to the fuel reforming device 11, a desulfurizer 14, a thermal flow meter (a thermal mass flow meter) 15, a composition-independent flow meter 16, a fuel temperature sensor 17, and a fuel pressure sensor 18 are provided.

The desulfurizer 14 desulfurizes and removes sulfur compounds contained in the gaseous fuel.

Since the thermal flow meter 15, the composition-independent flow meter 16, the fuel temperature sensor 17, and the fuel pressure sensor 18 are the same as the thermal flow meter 3, the composition-independent flow meter 4, the fuel temperature sensor 5, and the fuel pressure sensor 6 of the first embodiment (Fig. 1), the description thereof will not be provided.

The detected signals of the thermal flow meter 15, the composition-independent flow meter 16, the fuel temperature sensor 17, and the fuel pressure sensor 18 are sent to the control device 21.

For-reforming water for performing the steam reforming in the fuel reforming device 11 is supplied by a for-reforming-water supply device 19. The for-reforming-water supply device 19 is constituted by a pump and/or a flow rate control valve or the like connected to the water supply source, and the supply amount is controlled based on the signal from the control device 21.

The reformed fuel from the fuel reforming device 11 is supplied to an anode (A) of the fuel cell stack 12, and air is supplied to a cathode (C) thereof. The cathode air is supplied by a cathode-air supply device 20. The cathode-air supply device 20 is constituted by a pump (blower) and/or a flow rate control valve or the like connected to an air supply source, and a supply amount of the cathode air is controlled based on the signal from the control device 21.

The control device 21 is configured to include a microcomputer, performs the arithmetic processing in accordance with a control program, and controls the operations of various devices, including the fuel supply device 13, the for-reforming-water supply device 19, and the cathode-air supply device 20, while reading signals from various sensors, including the thermal flow meter 15, the composition- independent flow meter 16, the fuel temperature sensor 17, and the fuel pressure sensor 18.

In the fuel reforming device 11, in a case of methane CH4, the steam reforming reaction of Formula (1) described below is carried out, and in a case of propane C3H8, the steam reforming reaction of Formula (2) described below is carried out.

$$CH_4 + 2H_2O \rightarrow CO_2 + 4H_2 \qquad (1)$$

$$C_3H_8 + 6H_2O \rightarrow 3CO_2 + 10H_2 \qquad (2)$$

In the fuel cell stack 12, the electrode reaction of Formula (3) described below occurs at the cathode of each cell, and the electrode reaction of Formula (4) described below occurs at the anode, thereby performing the power generation.

$$\text{Cathode: } 1/2O_2 + 2e^- \rightarrow O^{2-} \text{ (solid electrolyze)} \qquad (3)$$

$$\text{Anode: } O^{2-} \text{ (solid electrolyte) } + H_2 \rightarrow H_2O + 2e^- \qquad (4)$$

Next, the control of fuel, the for-reforming water, and the cathode air using the control device 21 will be described.

In the normal control, the supply amount of fuel (target value) is set primarily according to a target power generation condition and the supply amount of the gaseous fuel is controlled via the fuel supply device 13. Here, feedback control is performed, referring to the measured flow rate of the thermal flow meter 15. Furthermore, the supply amount of the for-reforming water (target value) is set by referring to the measured flow rate of the thermal flow meter 15, for example, and the supply amount of the for-reforming water is controlled via the for-reforming-water supply device 19. Furthermore, the supply amount of cathode air (target value) is set according to the target power generation condition or by referring to the measured flow rate of the thermal flow meter 15, and the supply amount of the cathode air is controlled via the cathode air supply device 20.

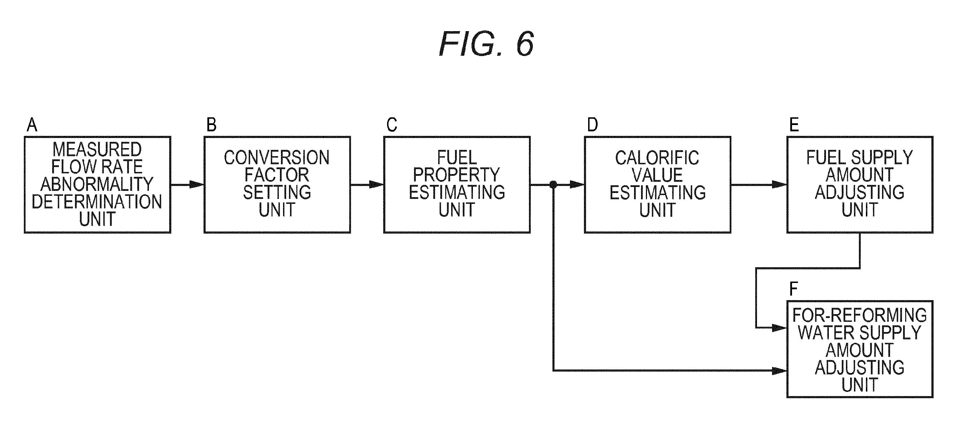

Meanwhile, in order to cope with the measured flow rate abnormality of the thermal flow meter 15, as illustrated in the functional block diagram of Fig. 6, the control device 21 is equipped with a measured flow rate abnormality determination unit A configured to determine whether there is an abnormal state based on the degree of difference between the measured value of the thermal flow meter 15 and the measured value of the composition-independent flow meter 16, a conversion factor setting unit B configured to set a conversion factor with respect to the measured value of the thermal flow meter 15 when it is determined that there is the abnormal state, a fuel property estimating unit C configured to estimate the fuel properties of the gaseous fuel on the basis of the conversion factor, a calorific value estimating unit D configured to estimate the calorific value of the gaseous fuel on the basis of the fuel properties of the gaseous fuel, and a fuel supply amount adjusting unit E configured to adjust a supply amount of the gaseous fuel by the fuel supply device 13 so that a target supply calorific value per unit time is obtained on the basis of the calorific value of the gaseous fuel.

In the control device 21, a for-reforming water supply amount adjusting unit F configured to adjust the supply amount of the for-reforming water supplied by the for-reforming-water supply device 19 is further provided.

The measured flow rate abnormality determination unit A determines that there is an abnormal state (the measured value of the thermal flow meter 15 is different from the actual flow rate), when the measured value of the thermal flow meter 15 and the measured value of the composition-independent flow meter 16 differ from each other by a certain degree or higher.

The conversion factor setting unit B sets the conversion factor based on the ratio of the measured value of the composition-independent flow meter 16 and the measured value of the thermal flow meter 15.

Specifically, the fuel property estimating unit C specifies the sub-ingredient from the predetermined sub-ingredient candidates (for example, $C_3H_8$ and $N_2$) depending on the result of comparison between the conversion factor set by the conversion factor setting unit B and the conversion factor previously determined for the main ingredient (for example, $CH_4$) of the gaseous fuel, and obtains the molar fractions of the main ingredient and the specified sub-ingredient, based on the conversion factor set by the conversion factor setting unit B, and the conversion factor previously determined for the main ingredient and a conversion factor previously determined for the specified sub-ingredient.

Specifically, the calorific value estimating unit D calculates the calorific value of the gaseous fuel from the respective calorific values and the respective molar fractions of the main ingredient and the specified sub-ingredient.

Specifically, the fuel supply amount adjusting unit E calculates a target supply amount of fuel, by dividing the target supply calorific value per unit time by the calorific value of the gaseous fuel estimated by the calorific value estimating unit D.

The for-reforming water supply amount adjusting unit F calculates a target supply amount of the for-reforming water, based on the target supply amount of fuel calculated by the fuel supply amount adjusting unit E and the fuel properties (the molar fraction of each ingredient) estimated by the fuel property estimating unit C.

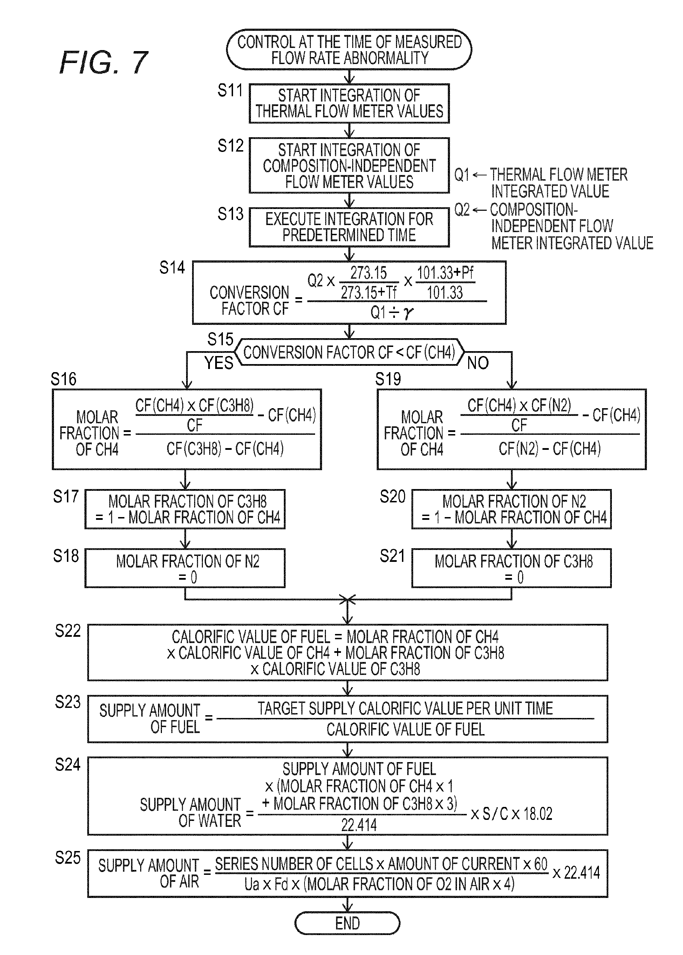

Here, the flowchart for achieving the function of the measured flow rate abnormality determination unit A is basically the same as that of Fig. 3, and the description thereof will not be provided. The functions of the conversion factor setting unit B, the fuel property estimating unit C, the calorific value estimating unit D, the fuel supply amount adjusting unit E, and the for-reforming water supply amount adjusting unit F are achieved by the flowchart of Fig. 7.

Fig. 7      is a flowchart of the control at the time of measured flow rate abnormality determination (control of the supply amounts of fuel, the for-reforming water, and the cathode air at the time of the abnormality determination).

Furthermore, since S11 to S22 of Fig. 7 are basically the same as S11 to S22 of Fig. 4, the same step reference numerals are denoted.

In S11, the integration of the measured values (thermal flow meter values) of the thermal flow meter 15 starts.

In S12, the integration of the measured values (composition-independent flow meter values) of the composition-independent flow meter 16 starts.

In S13, these integrations are executed for a predetermined time period to obtain a thermal flow meter integrated value (mass flow rate) Q1 and a composition-independent flow meter integrated value (volumetric flow rate) Q2, as the final integrated values.

In S14, the conversion factor CF is calculated by the following formula.

$$\text{Conversion factor CF} = [Q2 \times (273.15 \div (273.15 + Tf)) \times ((101.33 + Pf) \div 101.33)]/[Q1 \div \gamma]$$

In S15, it is determined whether the conversion factor CF is less than the conversion factor CF(CH4) = 0.74 of methane $CH_4$. The purpose of this is to approximate the composition by the results of determination.

When the conversion factor CF is less than the conversion factor CF(CH4) of methane $CH_4$ (i.e., CF < CF(CH4)), the flow proceeds to S16 to S18. In this case, it is estimated that the gas consists of two ingredients, methane $CH_4$ and propane $C_3H_8$, and the molar fractions of these ingredients are calculated.

In S16, the molar fraction of methane $CH_4$ is calculated from the conversion factor CF obtained in S14, the conversion factor CF(CH4) = 0.74 of methane $CH_4$, and the conversion factor CF(C3H8) = 0.34 of propane $C_3H_8$, by

the following formula.

$$\text{Molar fraction of CH4} = [CF(CH4) \times CF(C3H8)/CF - CF(CH4)]/[CF(C3H8) - CF(CH4)]$$

In S17, the molar fraction of propane C3H8 is calculated from the molar fraction of methane CH4 obtained in S16, by the following formula.

$$\text{Molar fraction of C3H8} = 1 - \text{molar fraction of CH4}$$

In S18, under the above-described estimation, the molar fraction of nitrogen N2 is set to 0 as in the following formula.

$$\text{Molar fraction of N2} = 0$$

When the conversion factor CF is greater than the conversion factor CF(CH4) of methane CH4 (i.e., CF > CF(CH4)), the flow proceeds to S19 to S21. In this case, it is estimated that the gas consists of two ingredients, methane CH4 and nitrogen N2, and the molar fractions of these ingredients are calculated.

In S19, the molar fraction of methane CH4 is calculated from the conversion factor CF obtained in S14, the conversion factor CF(CH4) = 0.74 of methane CH4, and the conversion factor CF(N2) = 1.00 of nitrogen N2, by the following formula.

$$\text{Molar fraction of CH4} = [CF(CH4) \times CF(N2)/CF - CF(CH4)]/[CF(N2) - CF(CH4)]$$

In S20, the molar fraction of nitrogen N2 is calculated from the molar fraction of methane CH4 obtained in S19, by the following formula.

$$\text{Molar fraction of N2} = 1 - \text{molar fraction of CH4}$$

In S21, under the above-described estimation, the molar fraction of propane C3H8 is set to 0 as in the following formula.

$$\text{Molar fraction of C3H8} = 0$$

After calculation of the molar fractions in S16 to S18 or S19 to S21, the flow proceeds to S22.

In S22, the calorific value (the calorific value that occurs when fuel of a certain unit is completely combusted) of the gaseous fuel is calculated. Specifically, the calorific value of the gaseous fuel is calculated from previously prepared known calorific values of CH4 and C3H8, and the respective molar fractions of CH4 and C3H8 obtained in S16 to S21, by the following formula.

$$\text{Calorific value of the gaseous fuel} = \text{molar fraction of CH4} \times \text{calorific}$$
$$\text{value of CH4} + \text{molar fraction of C3H8} \times \text{calorific value of C3H8}$$

In S23, the supply amount of fuel is calculated based on the calorific value of the gaseous fuel obtained in S22 so as to obtain the target supply calorific value per unit time. Specifically, the supply amount of fuel is calculated, by dividing the target supply calorific value per unit time by the calorific value of the gaseous fuel.

$$\text{Supply amount of fuel} = (\text{target supply calorific value per unit}$$
$$\text{time})/(\text{calorific value of the gaseous fuel})$$

In S24, a supply amount of the for-reforming water (target value) is calculated from the supply amount of fuel determined in S23 and the composition of the gaseous fuel (molar fraction of methane CH4 and molar fraction of propane C3H8), by the following formula.

$$\text{Supply amount of for-reforming water} = \text{supply amount of fuel} \times (\text{molar}$$
$$\text{fraction of CH4} \times 1 + \text{molar fraction of C3H8} \times 3)/22.414 \times S/C \times 18.02$$

Here, "1" in the formula is the number of carbon of methane CH4, "3" is the number of carbon of propane C3H8, "22.414" is the molar volume (L/mol), S/C is a steam-carbon ratio (target value, for example, 2.5), and "18.02" is the molecular weight of water vapor.

In S25, a supply amount of cathode air (target value) is calculated by the following formula.

Amount of air supply = [the number of cells connected in series$\times$ amount of current $\times$ 60]/[Ua $\times$ Fd $\times$ (molar fraction of 02 in the air $\times$ 4)] $\times$ 22.414

Here, Ua is a predetermined rate of air utilization (target value, for example, 0.30), Fd is the Faraday constant (96485.3399), and "22.414" is a molar volume (L/mol). Furthermore, "4" is the number of electrons generated from 02 due to the electrode reaction (see the above-described electrode reaction formula).

The supply amount of cathode air is calculated from the target power generation condition in this case, but it may be calculated based on the supply amount of fuel and the air-fuel ratio.

The supply amount of fuel, the supply amount of for-reforming water, and the supply amount of cathode air calculated in this way are set as the control target values, and the controls thereof are performed via the fuel supply device 13, the for-reforming-water supply device 19, and the cathode air supply device 20.

According to the present embodiment, even when the properties of the gaseous fuel vary in the fuel cell system, it is possible to estimate the fuel properties and to accurately control the supply amount of the gaseous fuel by setting the calorific value as the management value. In particular, it is preferred to control the supply amount of the gaseous fuel by setting the calorific value as the management value, during start-up preparation of the fuel cell system (temperature-rise process) and during stop process (temperature-fall process), and it is possible to obtain the desired calorific value, regardless of the variation in property of the gaseous fuel.

Furthermore, according to the present embodiment, since the system is configured to further include the for-reforming water supply amount adjusting unit F that adjusts the supply amount of the for-reforming water supplied by the for-reforming-water supply device 19, based on the supply amount of fuel adjusted by the fuel supply amount adjusting unit E and the fuel properties of the gaseous fuel estimated by the fuel property estimating unit C, it is possible to accurately control the supply amount of the for-reforming water in accordance with the control of the supply amount of fuel.

Furthermore, although in the above-described embodiment, the gaseous fuel is city gas, the main ingredient of the gaseous fuel is CH4, and the sub-ingredient candidates are propane C3H8 (or butane C4H10) and nitrogen N2, the present invention is not limited thereto. For example, the gaseous fuel may be LPG or the like, instead of city gas, and the main ingredient of the gaseous fuel may be ethane C2H6, propane C3H8 or the like, instead of methane CH4.

Furthermore, even when the gaseous fuel is changed, for example, from city gas to LPG, or from LPG to city gas, the change in the gaseous fuel may be automatically detected to notify the change to the control device, and the control program may be changed in response to the change in the gaseous fuel by the control device.

Furthermore, as for city gas, it is also possible to apply the present invention to a gas mixed with a hydrocarbon gas derived from a bio-gas or derived from a shale gas, or a gas mixed with an off-gas (hydrocarbon gas that is not derived from natural gas) produced as a byproduct in petrochemical plants.

However, in any case, it is desirable to use the conversion factor in regard to three ingredients, that is, the main ingredient of the gaseous fuel, the combustible ingredient having the calorific value different from that of the main ingredient, and the incombustible ingredient.

Furthermore, in the above-described embodiments, the configuration has been described in which the thermal flow meter 3,15 is used as the primary flow meter, and the composition-independent flow meter 4,16 is used as the auxiliary flow meter, but the composition-independent flow meter 4,16 may be used as the primary flow meter, and the thermal flow meter 3,15 may be used as the auxiliary flow meter.

Furthermore, in the above-described embodiments, the molar fraction of the gas ingredient is calculated as the fuel properties based on the conversion factor CF, and this molar fraction is used as a parameter to calculate the correction value (correction coefficient) with respect to the supply amount of fuel. However, other parameters representing the fuel properties may be used, or and the conversion factor CF itself may be used as a parameter to calculate the correction value with respect to the supply amount of fuel.

Furthermore, in the embodiment of the fuel cell system, when the supply device of for-reforming air is provided in order to jointly use the partial oxidation reaction as the reforming reaction, a for-reforming air supply amount adjusting unit configured to adjust the supply amount of the for-reforming air may be provided.

In this case, the supply amount of the for-reforming air may be calculated, for example, by the following formula.

$$\text{Supply amount of for-reforming air} = \text{supply amount of fuel} \times (\text{molar fraction of CH4} \times 1 + \text{molar fraction of C3H8} \times 3)/(\text{oxygen concentration in the air}) \times O/C$$

Here, O/C in the formula is an oxygen-carbon ratio.

Furthermore, in the embodiment of the fuel cell system, when preparing the start-up of the system in which it is effective to control the supply amount of fuel based on the calorific value as a management value, the gaseous fuel does not become a temperature at which the reforming reaction and the electrode reaction occur, and the gaseous fuel is combusted by a burner to raise the temperature.

In this case, the supply amount of combustion air is calculated, for example, by the following formula.

$$\text{Supply amount of combustion air} = \text{supply amount of fuel} \times (\text{molar fraction of CH4} \times 2 + \text{molar fraction of C3H8} \times 5)/(\text{oxygen concentration in the air}) \times A/F$$

Here, "2" in the formula is the number of oxygen molecular required for complete combustion ($CH_4 + 2O_2 \rightarrow CO_2 + 2H_2O$) of methane CH4, "5" is the number of oxygen molecular required for complete combustion ($C_3H_8 + 5O_2 \rightarrow 3CO_2 + 4H_2O$) of propane C3H8, and A/F is a target air-fuel ratio.

Furthermore, the illustrated embodiments are intended to merely illustrate examples of the present invention, and it is needless to say that the present invention covers various improvements and modifications to be made by those skilled in the art within the scope of the appended claims, in addition to those directly illustrated by the described embodiments.

**REFERENCE SYMBOL LIST**

1    Supply target
2    Fuel supply device
3    Thermal flow meter
4    Composition-independent flow meter
5    Fuel temperature sensor

6      Fuel pressure sensor
7      Control device
11     Fuel reforming device
12     Fuel cell stack
13     Fuel supply device
14     Desulfurizer
15     Thermal flow meter
16     Composition-independent flow meter
17     Fuel temperature sensor
18     Fuel pressure sensor
19     For-reforming-water supply device
20     Cathode air supply device
21     Control device

**Claims**

1.  A fuel supply system comprising: a fuel supply device configured to supply a hydrocarbon-based gaseous fuel to a supply target; a flow meter configured to measure a flow rate of the gaseous fuel supplied by the fuel supply device; and a control device to which a signal of the flow meter is input to control a supply amount of the fuel supply device, wherein the flow meter includes a thermal flow meter, and a composition-independent flow meter capable of measuring the flow rate without depending on a composition of the gaseous fuel, and
    wherein the control device includes
    a measured flow rate abnormality determination unit configured to determine whether there is an abnormal state, based on a degree of difference between a measured value of the thermal flow meter and a measured value of the composition-independent flow meter,
    a conversion factor setting unit configured to set a conversion factor with respect to the measured value of the thermal flow meter when it is determined that there is the abnormal state,
    a fuel property estimating unit configured to estimate the fuel properties of the gaseous fuel based on the conversion factor,
    a calorific value estimating unit configured to estimate a calorific value of the gaseous fuel based on the fuel properties of the gaseous fuel, and
    a fuel supply amount adjusting unit configured to adjust a supply amount of the gaseous fuel supplied by the fuel supply device based on the calorific value of the gaseous fuel so that a target supply calorific value per unit time is obtained.

2.  The fuel supply system according to claim 1,
    wherein the conversion factor setting unit sets the conversion factor based on a ratio of the measured value of the composition-independent flow meter and the measured value of the thermal flow meter.

3.  The fuel supply system according to claim 2,
    wherein the fuel property estimating unit specifies a sub-ingredient from predetermined sub-ingredient candidates, depending on the result of comparison between a conversion factor set by the conversion factor setting unit and a conversion factor previously determined for a main ingredient of the gaseous fuel, and the fuel property estimating unit obtains molar fractions of the main ingredient and the specified sub-ingredient, based on the conversion factor set by the conversion factor setting unit, the conversion factor previously determined for the main ingredient and a conversion factor previously determined for the specified sub-ingredient.

4.  The fuel supply system according to claim 3, wherein the sub-ingredient candidates are a combustible ingredient having a calorific value different from that of the main ingredient of the gaseous fuel, and an incombustible ingredient.

5.  The fuel supply system according to claim 3, wherein the calorific value estimating unit calculates the calorific value of the gaseous fuel, from the respective calorific values and the respective molar fractions of the main ingredient and the specified sub-ingredient.

6.  The fuel supply system according to claim 1, wherein the fuel supply amount adjusting unit calculates a target supply amount of fuel, by dividing the target supply amount of heat generation per unit time by the amount of heat generation of the gaseous fuel.

**7.** A fuel cell system comprising: a fuel reforming device configured to generate a hydrogen-rich reformed fuel by performing steam reforming of a hydrocarbon-based gaseous fuel; a fuel cell stack configured to perform power generation by an electrochemical reaction between the generated reformed fuel and air; a fuel supply device configured to supply the gaseous fuel to the reforming device; a flow meter configured to measure a flow rate of the gaseous fuel supplied to the reforming device from the fuel supply device; and a control device to which a signal of the flow meter is input to control a supply amount by the fuel supply device.

wherein the flow meter includes a thermal flow meter, and a composition-independent flow meter capable of measuring the flow rate without depending on a composition of the gaseous fuel, and

wherein the control device includes

a measured flow rate abnormality determination unit configured to determine whether there is an abnormal state based on a degree of difference between a measured value of the thermal flow meter and a measured value of the composition-independent flow meter,

a conversion factor setting unit configured to set a conversion factor with respect to the measured value of the thermal flow meter when it is determined that there is the abnormal state,

a fuel property estimating unit configured to estimate the fuel properties of the gaseous fuel based on the conversion factor,

a calorific value estimating unit configured to estimate a calorific value of the gaseous fuel based on the fuel properties of the gaseous fuel, and

a fuel supply amount adjusting unit configured to adjust a supply amount of the gaseous fuel supplied by the fuel supply device based on the calorific value of the gaseous fuel so that a target supply calorific value per unit time is obtained.

**8.** The fuel cell system according to claim 7,
wherein the conversion factor setting unit sets the conversion factor based on a ratio of the measured value of the composition-independent flow meter and the measured value of the thermal flow meter.

**9.** The fuel cell system according to claim 8,
wherein the fuel property estimating unit specifies a sub-ingredient from predetermined sub-ingredient candidates, depending on the result of comparison between the conversion factor set by the conversion factor setting unit and a conversion factor previously determined for a main ingredient of the gaseous fuel, and the fuel property estimating unit obtains molar fractions of the main ingredient and the specified sub-ingredient, based on the conversion factor set by the conversion factor setting unit, the conversion factor previously determined for the main ingredient, and a conversion factor previously determined for the specified sub-ingredient.

**10.** The fuel cell system according to claim 9,
wherein the sub-ingredient candidates are a combustible ingredient having a calorific value different from that of the main ingredient of the gaseous fuel, and an incombustible ingredient.

**11.** The fuel cell system according to claim 9,
wherein the calorific value estimating unit calculates the calorific value of the gaseous fuel from the respective amounts of heat generation and the respective molar fractions of the main ingredient and the specified sub-ingredient.

**12.** The fuel cell system according to claim 7,
wherein the fuel supply amount adjusting unit calculates a target supply amount of fuel, by dividing the target supply calorific value per unit time by the calorific value of the gaseous fuel.

**13.** The fuel cell system according to claim 7, further comprising:

a for-reforming-water supply device configured to supply water for steam reforming to the fuel reforming device, wherein the control device further includes a for-reforming-water supply amount adjusting unit that adjusts a supply amount of the for-reforming water supplied by the for-reforming-water supply device, based on the amount of fuel supply adjusted by the fuel supply amount adjusting unit and the fuel properties of the gaseous fuel estimated by the fuel property estimating unit.

**14.** A method of running a fuel supply system including: a fuel supply device configured to supply a hydrocarbon-based gaseous fuel to a supply target, and a flow meter configured to measure a flow rate of the gaseous fuel supplied by the fuel supply device, wherein the flow meter includes a thermal flow meter, and a composition-independent flow meter capable of measuring the flow rate without depending on a composition of the gaseous fuel,

in order to control a supply amount by the fuel supply device, the method of running the fuel supply system comprising:

a measured flow rate abnormality determining step of determining whether there is an abnormal state, based on a degree of difference between a measured value of the thermal flow meter and a measured value of the composition-independent flow meter;

a conversion factor setting step of setting a conversion factor with respect to the measured value of the thermal flow meter when it is determined that there is the abnormal state;

a fuel property estimating step of estimating the fuel properties of the gaseous fuel based on the conversion factor;

a calorific value estimating step of estimating a calorific value of the gaseous fuel based on the fuel properties of the gaseous fuel; and

a fuel supply amount adjusting step of adjusting a supply amount of the gaseous fuel supplied by the fuel supply device based on the calorific value of the gaseous fuel so that a target supply calorific value per unit time is obtained.

15. A method of running a fuel supply system including: a fuel reforming device configured to generate a hydrogen-rich reformed fuel by performing steam reforming of a hydrocarbon-based gaseous fuel; a fuel cell stack configured to perform power generation by an electrochemical reaction between the generated reformed fuel and air; a fuel supply device configured to supply the gaseous fuel to the reforming device; and a flow meter configured to measure a flow rate of the gaseous fuel supplied to the reforming device from the fuel supply device, wherein the flow meter includes a thermal flow meter, and a composition-independent flow meter capable of measuring a flow rate without depending on a composition of the gaseous fuel,

in order to control a supply amount of the fuel supply device, the method of running the fuel supply system comprising:

a measured flow rate abnormality determining step of determining whether there is an abnormal state, based on a degree of difference between a measured value of the thermal flow meter and a measured value of the composition-independent flow meter;

a conversion factor setting step of setting a conversion factor with respect to the measured value of the thermal flow meter when it is determined that there is the abnormal state;

a fuel property estimating step of estimating the fuel properties of the gaseous fuel based on the conversion factor;

a calorific value estimating step of estimating a calorific value of the gaseous fuel based on the fuel properties of the gaseous fuel; and

a fuel supply amount adjusting step of adjusting a supply amount of the gaseous fuel supplied by the fuel supply device based on the calorific value of the gaseous fuel so that a target supply calorific value per unit time is obtained.

# FIG. 1

*FIG. 2*

| A | B | C | D | E |
|---|---|---|---|---|
| MEASURED FLOW RATE ABNORMALITY DETERMINATION UNIT | CONVERSION FACTOR SETTING UNIT | FUEL PROPERTY ESTIMATING UNIT | CALORIFIC VALUE ESTIMATING UNIT | FUEL SUPPLY AMOUNT ADJUSTING UNIT |

## FIG. 3

MEASURED FLOW RATE
ABNORMALITY DETERMINATION

S1 — START INTEGRATION OF
THERMAL FLOW METER VALUES

S2 — START INTEGRATION OF
COMPOSITION-INDEPENDENT
FLOW METER VALUES

Q1 ← THERMAL FLOW METER
INTEGRATED VALUE

Q2 ← COMPOSITION-
INDEPENDENT FLOW
METER INTEGRATED VALUE

S3 — EXECUTE INTEGRATION FOR
PREDETERMINED TIME

S4 — CONVERT THERMAL FLOW METER INTEGRATED VALUE Q1 INTO NORMAL
FLOW RATE (VOLUMETRIC FLOW RATE OF STANDARD STATE)
→ CALCULATE POST-CONVERSION THERMAL FLOW METER INTEGRATED VALUE Q1'

$$Q1' = Q1 \div \gamma$$

S5 — CONVERT COMPOSITION-INDEPENDENT FLOW METER INTEGRATED
VALUE (VOLUMETRIC FLOW RATE) Q2 INTO NORMAL VALUE
→ CALCULATE POST-CONVERSION COMPOSITION-INDEPENDENT
FLOW METER INTEGRATED VALUE Q2'

$$Q2' = Q2 \times \frac{273.15}{273.15+Tf} \times \frac{101.33+Pf}{101.33}$$

S6 — DO Q1' AND Q2' DIFFER BY
CERTAIN DEGREE OR HIGHER?

NO — S7 — PERFORM NORMAL CONTROL

YES — S8 — SHIFT TO CONTROL AT
THE TIME OF MEASURED
FLOW RATE ABNORMALITY

END

# FIG. 4

```
┌──────────────────────────────────────┐
│ CONTROL AT THE TIME OF MEASURED      │
│ FLOW RATE ABNORMALITY                │
└──────────────────────────────────────┘
                  ↓
S11 ┌──────────────────────────────────┐
    │ START INTEGRATION OF             │
    │ THERMAL FLOW METER VALUES        │
    └──────────────────────────────────┘
                  ↓
S12 ┌──────────────────────────────────┐
    │ START INTEGRATION OF             │     Q1 ← THERMAL FLOW METER
    │ COMPOSITION-INDEPENDENT          │          INTEGRATED VALUE
    │ FLOW METER VALUES                │
    └──────────────────────────────────┘     Q2 ← COMPOSITION-
S13 ┌──────────────────────────────────┐          INDEPENDENT FLOW
    │ EXECUTE INTEGRATION FOR          │          METER INTEGRATED VALUE
    │ PREDETERMINED TIME               │
    └──────────────────────────────────┘
```

S14

$$\text{CONVERSION FACTOR CF} = \dfrac{Q2 \times \dfrac{273.15}{273.15 + Tf} \times \dfrac{101.33 + Pf}{101.33}}{Q1 \div \gamma}$$

S15 ⟨ CONVERSION FACTOR CF < CF(CH4) ⟩ — YES / NO

**S16** (YES branch)

$$\text{MOLAR FRACTION OF CH4} = \dfrac{\dfrac{CF(CH4) \times CF(C3H8)}{CF} - CF(CH4)}{CF(C3H8) - CF(CH4)}$$

S17 MOLAR FRACTION OF C3H8 = 1 − MOLAR FRACTION OF CH4

S18 MOLAR FRACTION OF N2 = 0

**S19** (NO branch)

$$\text{MOLAR FRACTION OF CH4} = \dfrac{\dfrac{CF(CH4) \times CF(N2)}{CF} - CF(CH4)}{CF(N2) - CF(CH4)}$$

S20 MOLAR FRACTION OF N2 = 1 − MOLAR FRACTION OF CH4

S21 MOLAR FRACTION OF C3H8 = 0

S22 CALORIFIC VALUE = MOLAR FRACTION OF CH4 × CALORIFIC VALUE OF CH4 + MOLAR FRACTION OF C3H8 × CALORIFIC VALUE OF C3H8

S23

$$\text{SUPPLY AMOUNT OF FUEL} = \dfrac{\text{TARGET SUPPLY CALORIFIC VALUE PER UNIT TIME}}{\text{CALORIFIC VALUE OF FUEL}}$$

( END )

*FIG. 5*

EP 2 808 608 A1

# FIG. 6

*FIG. 7*

```
┌─────────────────────────────────────┐
│  CONTROL AT THE TIME OF MEASURED     │
│       FLOW RATE ABNORMALITY          │
└─────────────────────────────────────┘
                  ↓
S11  ┌─────────────────────────────────┐
     │  START INTEGRATION OF            │
     │  THERMAL FLOW METER VALUES       │
     └─────────────────────────────────┘
                  ↓
S12  ┌─────────────────────────────────┐
     │  START INTEGRATION OF            │
     │  COMPOSITION-INDEPENDENT         │
     │  FLOW METER VALUES               │
     └─────────────────────────────────┘
                  ↓
S13  ┌─────────────────────────────────┐
     │  EXECUTE INTEGRATION FOR         │
     │  PREDETERMINED TIME              │
     └─────────────────────────────────┘
```

Q1 ← THERMAL FLOW METER INTEGRATED VALUE

Q2 ← COMPOSITION-INDEPENDENT FLOW METER INTEGRATED VALUE

S14

$$\text{CONVERSION FACTOR CF} = \frac{Q2 \times \dfrac{273.15}{273.15 + Tf} \times \dfrac{101.33 + Pf}{101.33}}{Q1 \div \gamma}$$

S15  CONVERSION FACTOR CF < CF (CH4)

YES / NO

**S16**

$$\text{MOLAR FRACTION OF CH4} = \frac{\dfrac{CF(CH4) \times CF(C3H8)}{CF} - CF(CH4)}{CF(C3H8) - CF(CH4)}$$

**S17**  MOLAR FRACTION OF C3H8 = 1 − MOLAR FRACTION OF CH4

**S18**  MOLAR FRACTION OF N2 = 0

**S19**

$$\text{MOLAR FRACTION OF CH4} = \frac{\dfrac{CF(CH4) \times CF(N2)}{CF} - CF(CH4)}{CF(N2) - CF(CH4)}$$

**S20**  MOLAR FRACTION OF N2 = 1 − MOLAR FRACTION OF CH4

**S21**  MOLAR FRACTION OF C3H8 = 0

**S22**  CALORIFIC VALUE OF FUEL = MOLAR FRACTION OF CH4 × CALORIFIC VALUE OF CH4 + MOLAR FRACTION OF C3H8 × CALORIFIC VALUE OF C3H8

**S23**

$$\text{SUPPLY AMOUNT OF FUEL} = \frac{\text{TARGET SUPPLY CALORIFIC VALUE PER UNIT TIME}}{\text{CALORIFIC VALUE OF FUEL}}$$

**S24**

$$\text{SUPPLY AMOUNT OF WATER} = \frac{\text{SUPPLY AMOUNT OF FUEL} \times (\text{MOLAR FRACTION OF CH4} \times 1 + \text{MOLAR FRACTION OF C3H8} \times 3)}{22.414} \times S/C \times 18.02$$

**S25**

$$\text{SUPPLY AMOUNT OF AIR} = \frac{\text{SERIES NUMBER OF CELLS} \times \text{AMOUNT OF CURRENT} \times 60}{Ua \times Fd \times (\text{MOLAR FRACTION OF O2 IN AIR} \times 4)} \times 22.414$$

```
┌──────────┐
│   END    │
└──────────┘
```

**INTERNATIONAL SEARCH REPORT**

| International application No. |
|---|
| PCT/JP2013/051303 |

A. CLASSIFICATION OF SUBJECT MATTER
*F23N5/00*(2006.01)i, *F23N1/00*(2006.01)i, *G01F1/00*(2006.01)i, *G01F15/04* (2006.01)i, *H01M8/04*(2006.01)i, *H01M8/06*(2006.01)i

According to International Patent Classification (IPC) or to both national classification and IPC

B. FIELDS SEARCHED

Minimum documentation searched (classification system followed by classification symbols)
F23N5/00, F23N1/00, G01F1/00, G01F15/04, H01M8/04, H01M8/06

Documentation searched other than minimum documentation to the extent that such documents are included in the fields searched
Jitsuyo Shinan Koho          1922-1996   Jitsuyo Shinan Toroku Koho   1996-2013
Kokai Jitsuyo Shinan Koho   1971-2013   Toroku Jitsuyo Shinan Koho   1994-2013

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| A | JP 2007-24511 A (National Institute of Advanced Industrial Science and Technology), 01 February 2007 (01.02.2007), entire text; all drawings (Family: none) | 1-15 |
| A | JP 2787785 B2 (Yamatake-Honeywell Co., Ltd., Tokyo Gas Co., Ltd.), 20 August 1998 (20.08.1998), entire text; all drawings & JP 4-64020 A          & US 5230245 A & EP 465182 A3          & EP 465182 A2 | 1-15 |
| A | JP 2009-87126 A (Hitachi Metals, Ltd.), 23 April 2009 (23.04.2009), entire text; all drawings (Family: none) | 1-15 |

| ☒ Further documents are listed in the continuation of Box C. | ☐ See patent family annex. |

\* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed

"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search 02 April, 2013 (02.04.13) | Date of mailing of the international search report 16 April, 2013 (16.04.13) |
| Name and mailing address of the ISA/ Japanese Patent Office | Authorized officer |
| Facsimile No. | Telephone No. |

Form PCT/ISA/210 (second sheet) (July 2009)

25

<table>
<tr><td colspan="2" align="center">**INTERNATIONAL SEARCH REPORT**</td><td>International application No.<br><br>PCT/JP2013/051303</td></tr>
</table>

C (Continuation). DOCUMENTS CONSIDERED TO BE RELEVANT

| Category* | Citation of document, with indication, where appropriate, of the relevant passages | Relevant to claim No. |
|---|---|---|
| A | JP 2011-209152 A (Yamatake Corp.),<br>20 October 2011 (20.10.2011),<br>entire text; all drawings<br>(Family: none) | 1-15 |
| A | JP 3-39623 A (Tokyo Gas Co., Ltd., Oval Kiki Kogyo Kabushiki Kaisha),<br>20 February 1991 (20.02.1991),<br>entire text; all drawings<br>(Family: none) | 1-15 |
| A | JP 2010-8165 A (Tokyo Gas Co., Ltd.),<br>14 January 2010 (14.01.2010),<br>entire text; all drawings<br>(Family: none) | 1-15 |
| A | US 2010/0080262 A1 (ADVANCED ENERGY INDUSTRIES, INC.),<br>01 April 2010 (01.04.2010),<br>entire text; all drawings<br>& JP 2012-503833 A      & EP 2338038 A<br>& WO 2010/036675 A1     & KR 10-2011-0056543 A<br>& CN 102224397 A        & TW 201017358 A | 1-15 |

Form PCT/ISA/210 (continuation of second sheet) (July 2009)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2009162436 A